# EUROPÄISCHE PATENTANMELDUNG

(11) **EP 1 985 496 A2**
(43) Veröffentlichungstag der Anmeldung: **29.10.2008**
(21) Anmeldenummer: 08007920.5
(22) Anmeldetag: 24.04.2008
(51) Int. Cl.: B60Q 1/38

(54) **Verfahren und Schaltung zur Ansteuerung von Leuchtmitteln während eines photometrischen Messvorgangs**

(30) Priorität: 26.04.2007 DE 102007019701
(71) Anmelder: odelo GmbH, 71409 Schwaikheim (DE)
(72) Erfinder: Krochmann, Eike, 71654 Neckartenzlingen (DE); Müller, Otto, 73344 Gruibingen (DE); Mertens, Jens, 73734 Esslingen (DE)
(74) Vertreter: Kaufmann, Ursula Josefine

(57) **Zusammenfassung**

Die Erfindung betrifft ein Verfahren (100) zur Ansteuerung von Leuchtmitteln für ein Fahrzeug während eines photometrischen Testvorgangs, wobei mindestens ein Leuchtmittel (L) bei bestimmungsgemäßem Einsatz in einem Fahrzeug insbesondere zu einer Fahrtrichtungsanzeige (110) blinkend betrieben wird. Das mindestens eine Leuchtmittel (L) wird während des photometrischen Testvorgangs über einen vorgegebenen Zeitraum durch Anlegen einer Spannung (120) nicht blinkend betrieben wird, wobei nach dem Anlegen der Spannung (120) zumindest für eine innerhalb des Zeitraums liegende Zeitdauer das mindestens eine Leuchtmittel (L) mit einer Frequenz intermittierend so angesteuert wird, dass für das menschliche Auge scheinbar eine kontinuierliche Lichtabgabe erkennbar ist. Vorgeschlagen wird auch eine das Verfahren (100) ausführende Schaltung. Durch die vorgeschlagene Verfahrensweise können die zu prüfenden Leuchtmittel beim Messvorgang normgerecht betrieben werden, wobei sich die photometrischen Eigenschaften im Vergleich zum bestimmungsgemäaen Einsatz nicht oder kaum merklich verändern.

## Beschreibung

Die Erfindung betrifft ein Verfahren zur Ansteuerung von Leuchtmitteln für ein Fahrzeug sowie eine Schaltung zur Durchführung des Verfahrens nach den Oberbegriffen der unabhängigen Ansprüche.

Ein Verfahren und eine Schaltung zur Ansteuerung von Leuchtmitteln von Fahrzeugen wird z.B. in der EP 1087642 A2 beschrieben. Dort wird eine Ansteuerung von Leuchtmitteln, insbesondere von Leuchtdioden, vorgeschlagen, bei der die Leuchtmittel mit Nennstrom getaktet und ihre Helligkeit durch Pulsweitenmodulation eingestellt werden, um die jeweils zugeordnete Signal-Funktion, wie z.B. Schlusslicht- oder Bremslicht-Funktion, gemäß den gesetzlichen Vorschriften zu erfüllen. Als Leuchtmittel werden vorzugsweise Leuchtdioden eingesetzt. Die Schaltung weist insbesondere einen Mikroprozessor und Treiberstufen auf, mittels denen die jeweiligen Leuchtdioden optimal angesteuert werden können. Diese Schaltung und das entsprechende Ansteuerungs-Verfahren sind für den Normalbetrieb von Beleuchtungs- und Signaleinrichtungen für Kraftfahrzeuge vorgesehen und dienen weniger dem Zweck, die Funktion der Leuchtmittel, insbesondere im Rahmen eines photometrischen Messvorgangs, zu testen.

Ein Erfordernis zum Testen ergibt sich insbesondere für die behördliche Zulassung und Überprüfung von Beleuchtungs- und Signaleinrichtungen, wobei hier weltweit in den verschiedenen Regionen oder Ländern diverse Normen bzw.

Standards zur Anwendung kommen. So wird z.B. in den USA die Funktion der Beleuchtungs- und Signaleinrichtungen nach dem Standard FMVSS 108 beurteilt. In Kanada gilt die textlich gleich lautende Vorschrift CMVSS 108. Insbesondere was die Signal-Funktion für die Fahrtrichtungsanzeige betrifft, so sind zwar die photometrischen Eigenschaften (räumliche Lichtverteilung) festgelegt, jedoch gibt es keine konkreten Angaben über die Messbedingungen. Im Speziellen ist nicht festgelegt, ob die Lichtquelle während der Messung blinken oder konstant leuchten soll. Ferner gibt es keine Angabe darüber, ob die räumliche Lichtverteilung sofort oder nach Erreichen eines stabilen Betriebszustandes der Lichtquelle durchgeführt werden soll. Für die praktische Umsetzung des Messvorganges wird in den USA lediglich gefordert, dass Messlampen (Etalon) oder (wie im Falle von LEDs) die eingebauten Lichtquellen verwendet werden sollen. In Kanada jedoch wird darüber hinaus von der Industrie erwartet, dass die Norm SAE J1889 angewendet wird. Demgemäß muss die Fahrtrichtungsanzeiger-Funktion die photometrischen Werte nach einer Betriebsdauer von 1 Minute und nochmals nach einer Betriebsdauer von 10 Minuten erfüllen. Der Standard schreibt aber lediglich vor, dass der Prüfling mit Spannung versorgt werden soll, was bedeutet, dass das zu testende Leuchtmittel sich jeweils in einem nicht blinkendem Betriebszustand befinden soll. Somit besteht die bisherige Praxis der Referenzlabore darin, dass die Fahrtrichtungsanzeiger-Funktion sofort nach dem Einschalten photometrisch vermessen wird. Die Leuchtmittel (LED oder Lampen) werden dabei mit konstanter Spannung, d.h. nicht blinkend, betrieben. Der Messvorgang mit einem Goniophotometer dauert dabei etwa 2 bis 3 Minuten.

Diese Verfahrensweise ist aber insbesondere für Leuchtmittel ungeeignet, deren photometrischen Eigenschaften stark von der jeweiligen Betriebsart, d.h. Konstantbetrieb oder Blinkbetrieb, abhängen. So kann z.B. der Lichtstrom von Leuchtdioden (LED), je nach Konstruktion der Leuchte, während der Zeit eines Konstantbetriebs durch die Eigenerwärmung mehr oder weniger degradieren. Dies führt bei Anwendung von Normen, wie der SAE J1889, dazu, dass die Messung nach 1 Minute andere photometrischen Werte ergibt, als es im Normalbetrieb (Blinkbetrieb bzw. Fahrrichtungsanzeigefunktion) der Fall wäre. Die Messwerte nach 10 Minuten Betrieb würden noch geringer ausfallen.

Daher ist es Aufgabe der Erfindung, ein Verfahren zur Ansteuerung von Leuchtmitteln von Fahrzeugen vorzuschlagen, das die oben genannten Nachteile und Probleme in vorteilhafter Weise überwindet. Außerdem soll eine zur Durchführung des Verfahrens geeignete Schaltung vorgeschlagen werden.

Gelöst wird die Aufgabe durch ein Verfahren mit den Merkmalen des Anspruchs 1 sowie durch eine Schaltung mit den Merkmalen des nebengeordneten Anspruchs.

Demnach wird vorgeschlagen, dass bei dem Verfahren bzw. der Schaltung zur Ansteuerung von Leuchtmitteln für ein Fahrzeug während eines photometrischen Testvorgangs, wobei mindestens ein Leuchtmittel bei bestimmungsgemäßem Einsatz in einem Fahrzeug insbesondere zu einer Fahrtrichtungsanzeige blinkend betrieben wird, das mindestens eine Leuchtmittel während des photometrischen Testvorgangs über einen vorgegebenen Zeitraum durch Anlegen einer Spannung nicht blinkend betrieben wird, wobei nach dem Anlegen der Spannung zumindest für eine innerhalb des Zeitraums liegende Zeitdauer das mindestens eine Leuchtmittel intermittierend so angesteuert wird, dass für das menschliche Auge eine scheinbar kontinuierliche Lichtabgabe des mindestens einen Leuchtmittels erkennbar ist.

Die Schaltung zur Ansteuerung der Leuchtmittel weist Steuerungs- und Detektionsmittel auf, insbesondere einen Mikroprozessor und mindestens eine Treiberstufe, die das zumindest eine Leuchtmittel, dem die Fahrtrichtungsanzeiger-Funktion zugeordnet ist, nach Anlegen einer Spannung intermittierend für den Fall ansteuern, dass keine vorgelagerte bzw. vorgeschaltete Einrichtung (z.B. ein Blinkgeber) die intermittierende Funktion steuert. Der intermittierende Betrieb im Testvorgang ist für den menschlichen Betrachter nicht als Blinken wahrnehmbar. Eine bevorzugte Frequenz liegt z.B. bei 50 Hz oder darüber. Die Frequenz wird zweckmäßigerweise an die Bedingungen der Testapparatur, insbesondere des Photometers, angepasst werden können.

### Bevorzugte Ausführungsformen der Erfindung ergeben sich aus den Unteransprüchen:

Demnach werden das Verfahren sowie die Schaltung insbesondere während eines photometrischen Messvorgangs eingesetzt. Und als Leuchtmittel werden vorzugsweise Leuchtdioden verwendet.

Vorteilhafterweise wird das jeweils angesteuerte Leuchtmittel zunächst für eine erste Zeitdauer, insbesondere eine 1-3 Minuten umfassende Zeitdauer, mit einer konstanten Spannung betrieben, und anschließend wird das Leuchtmittel intermittierend angesteuert.

Die Erfindung hat u.a. den Vorteil, dass die Leuchtmittel für den Messvorgang normgerecht betrieben werden können, so dass sich die photometrischen Eigenschaften im Vergleich zum bestimmungsgemäßen Einsatz nicht merklich verändern.

Werden als Leuchtmittel bzw. Prüfling z.B. LEDs verwendet und erfindungsgemäß intermittierend betrieben, so wie es im normalen Gebrauch der Fall ist, stellt sich ein anderes thermisches Gleichgewicht ein. Im Allgemeinen kann erwartet werden, dass ganz andere photometrische Werte im Vergleich zum nicht intermittierenden Betrieb gemessen werden.

Wird eine Fahrtrichtungsanzeiger-Funktion mit einer speziellen elektronischen Schaltung versehen, die nach dem Anlegen einer, vorzugsweise zeitlich konstanten, Spannung die LEDs intermittierend ansteuert, kann in jedem Fall sicher gestellt werden, dass sich die Funktion immer im bestimmungsgemäßen Zustand befindet.

Damit kann eine unzulässige Eigenerwärmung der LEDs und damit ein ggf. durch Lichtstromdegradation verursachtes Unterschreiten der geforderten Mindestwerte verhindert werden.

Es muss lediglich sicher gestellt sein, dass die elektronische Schaltung ein fester Bestandteil der Funktion ist. Dann ist inhaltlich kein Widerspruch zu den genannten Messvorschriften oder gar FMVSS 108 / CMVSS 108 zu finden.

Hinsichtlich des Photometers sind hier allerdings besondere Anforderungen zu stellen, da die Messwerte getriggert und innerhalb eines kurzen Zeitraumes aufgenommen werden müssen.

Außerdem sei darauf verwiesen, dass die ECE-R6 ausdrücklich blinkenden Betrieb bei der Messung zur Prüfung der Übereinstimmung mit den gesetzlichen Vorschriften erlaubt.

Die Erfindung und die sich daraus ergebenden Vorteile werden noch näher anhand der nachfolgenden Beschreibung eines Ausführungsbeispiels unter Bezugnahme auf die beiliegenden schematischen Zeichnungen veranschaulicht.

Die Fig. 1 zeigt ein Flussdiagramm eines erfindungsgemäßen Verfahrens.

Die Fig. 2 zeigt ein Blockschaltbild einer erfindungsgemäßen Schaltung.

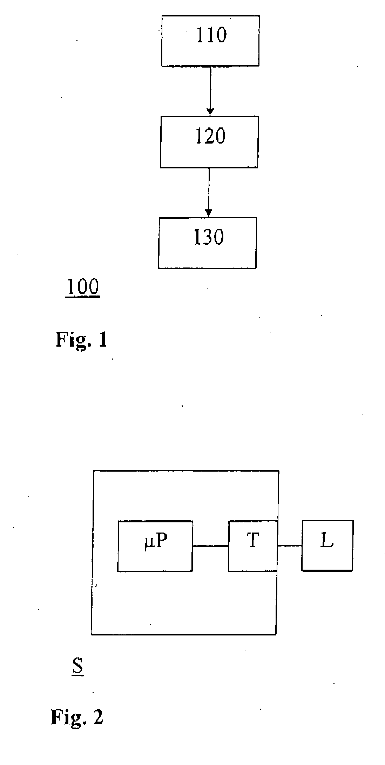

In der Fig. 1 ist ein Fluss- bzw. Ablaufdiagramm für ein Ausführungsbeispiel eines Verfahrens gemäß der Erfindung dargestellt. Das Verfahren 100 dient zur Ansteuerung von Leuchtmitteln von Fahrzeugen, wobei den Leuchtmitteln unterschiedliche Signal-Funktionen zugeordnet werden, und umfasst im Wesentlichen folgende Schritte:

In einem ersten Schritt 110 wird zumindest einem der Leuchtmittel eine Fahrtrichtungsanzeiger-Funktion zugeordnet. Das kann beispielsweise die Funktion "Blinken" sein.

Anschließend wird in einem Schritt 120 an dieses Leuchtmittel, dem z.B. die Fahrtrichtungsanzeiger-Funktion zugeordnet worden ist, eine Spannung angelegt, die z.B. konstant sein kann. Wenn die Spannung angelegt worden ist, dann wird in einem weiteren Schritt 130 das Leuchtmittel intermittierend angesteuert.

Das geschieht insbesondere im Rahmen eines photometrischen Messvorgangs, bei dem das jeweils angesteuerte Leuchtmittel zunächst für eine erste Zeitdauer, hier z.B. für eine Zeitspanne von 1-3 Minuten, mit einer konstanten Spannung betrieben wird, und anschließend intermittierend angesteuert wird.

Durch diese Verfahrensweise können die zu prüfenden Leuchtmittel beim Messvorgang normgerecht betrieben werden, wobei sich die photometrischen Eigenschaften im Vergleich zum bestimmungsgemäßen Einsatz nicht oder kaum merklich verändern. Es stellt sich ein vorteilhaftes thermisches Gleichgewicht ein, so dass im Vergleich zum nicht intermittierenden Betrieb deutlich bessere Werte gemessen werden, die den eigentlichen Zustand des Prüflings wiedergeben. Eine unzulässige Eigenerwärmung der Leuchtmittel (hier der LEDs) und damit ein ggf. durch Lichtstromdegradation verursachtes Unterschreiten der geforderten Mindestwerte werden effektiv verhindert.

Die Fig. 2 zeigt ein schematisches Blockschaltbild für eine Schaltung, die das oben beschriebene Verfahren ausführt. Die Schaltung S ist mit dem mindestens einen Leuchtmitteln L verbunden, das als Prüfling dient und z.B. in Gestalt einer oder mehrerer anzusteuernder Leuchtdioden vorliegt. Wie oben beschrieben wird, sind dem oder den Leuchtmittel(n) eine bestimmte Signal-Funktionen, nämlich eine Fahrtrichtungsanzeiger-Funktion zugeordnet.

Die Schaltung S umfasst nun im Wesentlichen Steuerungsmittel und/oder Detektionsmittel, die beispielsweise in Gestalt eines Mikroprozessors µP ausgeführt sind und mindestens eine Treiberstufe T, die das zumindest eine Leuchtmittel L, nach dem Anlegen der Spannung intermittierend ansteuern.

Die gezeigte Schaltung S wird für den oben beschriebenen photometrischen Messvorgang verwendet, kann aber auch Teil einer Funktionsschaltung zum Betrieb der Leuchtmittel L sein.

In diesem Zusammenhang ist es vorteilhaft, wenn bei der Umsetzung des Verfahrens innerhalb einer solchen elektronischen Schaltung sicher gestellt ist, dass diese Schaltung ein fester Bestandteil der Funktion ist. Denn dann kann sich inhaltlich kein Widerspruch zu den genannten Messvorschriften ergeben. Daher wird hier auch vorgeschlagen, die Fahrtrichtungsanzeiger-Funktion mit der hier beschriebenen speziellen, elektronischen Schaltung zu versehen bzw. zu realisieren, so dass nach dem Anlegen einer, vorzugsweise zeitlich konstanten, Spannung die LEDs intermittierend angesteuert werden. Somit kann in jedem Fall sichergestellt werden, dass sich die Funktion immer im bestimmungsgemäßen Zustand befindet.

## Patentansprüche

1. Verfahren (100) zur Ansteuerung von Leuchtmitteln für ein Fahrzeug während eines photometrischen Testvorgangs, wobei mindestens ein Leuchtmittel (L) bei bestimmungsgemäßem Einsatz in einem Fahrzeug insbesondere zu einer Fahrtrichtungsanzeige (110) blinkend betrieben wird,
**dadurch gekennzeichnet, dass** das mindestens eine Leuchtmittel (L) während des photometrischen Testvorgangs über einen vorgegebenen Zeitraum durch Anlegen einer Spannung (120) nicht blinkend betrieben wird, wobei nach dem Anlegen der Spannung (120) zumindest für eine innerhalb des Zeitraums liegende Zeitdauer das mindestens eine Leuchtmittel (L) mit einer Frequenz intermittierend so angesteuert wird, dass für das menschliche Auge scheinbar eine kontinuierliche Lichtabgabe erkennbar ist.

2. Verfahren (100) nach Anspruch 1, **dadurch gekennzeichnet, dass**
eine konstante Spannung angelegt wird (120).

3. Verfahren (100) nach Anspruch 1, **dadurch gekennzeichnet, dass**
das jeweils angesteuerte Leuchtmittel (L) für einen photometrischen Messvorgang nach Anlegen einer konstanten Spannung intermittierend angesteuert wird (130).

4. Verfahren (100) nach Anspruch 1, **dadurch gekennzeichnet, dass**
als Leuchtmittel Leuchtdioden (L) verwendet werden.

5. Verfahren (100) nach Anspruch 1, **dadurch gekennzeichnet, dass**
das jeweils angesteuerte Leuchtmittel (L) zunächst für eine erste Zeitdauer, insbesondere eine 1-3 Minuten umfassende Zeitdauer, mit einer konstanten Spannung betrieben wird (120), und anschließend intermittierend angesteuert wird (130).

6. Schaltung (S) zur Ansteuerung von Leuchtmitteln für ein Fahrzeug während eines photometrischen Testvorgangs, wobei mindestens ein Leuchtmittel (L) bei bestimmungsgemäßem Einsatz in einem Fahrzeug insbesondere zu einer Fahrtrichtungsanzeige (110) blinkend betreibbar ist, nach einem der vorhergehenden Ansprüche,
**dadurch gekennzeichnet, dass** die Schaltung (S) Steuerungs- und Detektionsmittel aufweist, insbesondere einen Mikroprozessor (µP) und mindestens eine Treiberstufe (T), die das zumindest eine Leuchtmittel (L), dem die Fahrtrichtungsanzeiger-Funktion zugeordnet ist, nach Anlegen einer, insbesondere konstanten, Spannung intermittierend ansteuern.

7. Schaltung (S) nach Anspruch 6, **dadurch gekennzeichnet, dass**
die Schaltung für einen photometrischen Messvorgang verwendbar ist.

8. Schaltung (S) nach Anspruch 6 oder 7, **dadurch gekennzeichnet, dass**
die Schaltung (S) Teil einer Funktionsschaltung zum Betrieb der Leuchtmittel ist.
